# NEUE EUROPÄISCHE PATENTSCHRIFT

(11) **EP 1 710 149 B2**
(45) Veröffentlichungstag und Bekanntmachung des Hinweises auf die Entscheidung über den Einspruch: **07.01.2015**
(45) Hinweis auf die Patenterteilung: 24.06.2009
(21) Anmeldenummer: 06006954.9
(22) Anmeldetag: 31.03.2006
(51) Int. Cl.: B62D 21/02

(54) **Schlussquerträger für ein Nutzfahrzeug**
End cross member for a utiliity vehicle
Traverse terminale pour véhicule utilitaire

(30) Priorität: 04.04.2005 DE 102005015423
(43) Veröffentlichungstag der Anmeldung: 11.10.2006
(73) Patentinhaber: MAN Truck & Bus AG, 80995 München (DE)
(72) Erfinder: Just, Robert, 85256 Vierkirchen (DE); Kissinger, Alfred, 80797 München (DE); Dresig, Horst, 82152 Planegg (DE)

(56) Entgegenhaltungen:
- WO-A-01/76896
- DE-A1- 19 826 119
- JP-A- 10 218 011

## Beschreibung

Die Erfindung betrifft einen Schlussquerträger für ein Nutzfahrzeug mit einem zwei Längsträger aufweisenden Fahrzeugrahmen, wobei der Schlussquerträger als einstückiges im wesentlichen U-förmig ausgebildetes Profilteil mit einem Mittelsteg und beidseitig an Längskanten des Mittelstegs anschließenden Flanschleisten ausgebildet ist und an dem Schlussquerträger stirnseitig Befestigungsfahnen vorgesehen sind, wobei obere und untere Befestigungsfahnen jeweils von den beiden Flanschleisten und beidseitig jeweils eine zumindest annähernd in Querrichtung zu den oberen und unteren Befestigungsfahnen verlaufende vertikale Befestigungsfahne von dem Mittelsteg des U-Profils hervorstehen und an den Befestigungsfahnen Löcher vorgesehen sind, von denen die in den oberen und unteren Befestigungsfahnen befindlichen Löcher jeweils in einer oberen und einer unteren Befestigungsebene angeordnet sind.

Derartige Schlussquerträger sind aus dem Stand der Technik bekannt. So weisen Rahmen für Nutzfahrzeuge im Allgemeinen zwei in Fahrtrichtung verlaufende Längsträger auf, wobei die Längsträger endseitig mit einem quer zur Fahrtrichtung angeordneten Schlussquerträger abschließen. Der Schlussquerträger bietet dabei eine Montagemöglichkeit für Anhängerkupplungen, um an diese über eine Deichsel Anhänger mit dem Nutzfahrzeug zu verbinden. Somit erfolgt die Verbindung von Zug- und Anhängefahrzeug über den Schlussquerträger, womit sich dieser im Kraftfluss zwischen dem Zug- und Anhängefahrzeug befindet.

Dieser Kraftfluss stellt hohe Anforderungen an die mechanische Festigkeit des Schlussquerträgers, wobei neben der erforderlichen Festigkeit des Schlussquerträgers selbst, insbesondere an die Auslegung der seitlichen Verbindung zu den Längsträgern des Fahrzeugrahmens hohe Anforderungen an die Übertragung der Kräfte gestellt werden.

Anhänger mit nur einer Achse bzw. mit einer Doppelachse weisen i.d.R. eine Starrdeichsel auf, die zur horizontalen Kraftkomponente in Fahrtrichtung zusätzlich eine Vertikalkomponente auf die Anhängerkupplung ausübt. Im Fahrbetrieb verläuft dabei die resultierende Wirkungslinie der Verbindungskraft, welche von der Deichsel über die Anhängerkupplung in den Schlussquerträger eingeleitet wird, in Abhängigkeit der Stütz- und Anhängelast in Richtung der Horizontalen geneigt. Die hohen Vertikallasten führen beim bekannten Stand der Technik häufig zum Einreissen der Ecken des Schlussquerträgers, was bis zum vollständigen Versagen des Schlussquerträgers führen kann.

Eine Verschraubung zwischen Schlussquerträger und den Längsträgern des Fahrzeugrahmens ist gemäß einer bekannten Lösung des Standes der Technik auch über vertikal angeordnete Befestigungsfahnen vorgesehen, jedoch bieten im wesentlichen mittig in den Vertikalstegen der Längsträger angeordnete Verbindungselemente keinen wesentlichen Beitrag zur Steigerung der Festigkeit für die Übertragung von Momenten in der Verbindungsebene.

Der Schlussquerträger ist dabei in Aussparungen in den Obergurten in den Längsträger eingesetzt und über Verschraubungen innenseitig in den Längsträgern mit diesen verschraubt. Die Verschraubung kann dabei in den vertikalen Stegen der Längsträger über Montagefahnen erfolgen, welche am Schlussquerträger angeformt sind. Zu einer Erhöhung der Gesamtsteifigkeit des gesamten Fahrzeugrahmens trägt die Verschraubung allerdings nur unwesentlich bei.

Aus der DE 198 26 119 A1 ist ein Schlussträger für Sattelzugmaschinen nach dem Oberbegriff des Anspruchs 1 bekannt. Hierin ist ein Rahmen für Nutzfahrzeuge mit einem beide Längsträger endseitig miteinander verbindenden, einteiligen Schlussquerträger offenbart. Es liegen die oberen Flanschleisten des Schlussquerträgers im Bereich ihres freien Endes niveaumäßig etwa in der Höhe der oberen Horizontalflansche der Längsträger auf, was hauptsächlich zur Erhöhung der aufnehmbaren Kräfte und Momente zwischen dem Schlussquerträger und den Längsträgern beiträgt. Der Schlussquerträger ist jedoch nur endseitig in die in den Obergurten der Längsträger eingearbeiteten Konturen montierbar, was eine zusätzliche Bearbeitung der Obergurte erfordert. Diese, eine Verbindung bietende Einpassung in die Kontur der Obergurte, ist gemäß dem Stand der Technik erforderlich, da eine hinreichende Festigkeit der Verbindung zwischen den Befestigungsfahnen nicht erreichbar ist. Zusätzlich weisen die Vertikalstege der Längsträger im Bereich ihrer Aussparungen in Fahrtrichtung niveaumäßig eine steigende, in Fahrtrichtung geneigt ausgeführte Schräge auf, was eine aufwändige Bearbeitung erfordert. Zur Anpassung an die Schräge in den Längsträgern muss weiterhin die obere Flanschleiste des Schlussquerträgers ein in Fahrtrichtung schräg ansteigendes Niveau aufweisen, wodurch sich die Befestigungsfahnen konstruktiv verlängern.

Es ist daher die Aufgabe der vorliegenden Erfindung, einen verbesserten Schlussquerträger zu schaffen, der die Nachteile des bekannten Standes der Technik vermeidet und im Gegensatz zu diesem hohe Vertikallasten aufnehmen kann. Ferner soll eine Lösung zur Verfügung gestellt werden, die einfach und kostengünstig in Herstellung und Montage ist.

Diese Aufgabe wird erfindungsgemäß durch einen Schlussquerträger für ein Nutzfahrzeug mit den Merkmalen des Patentanspruchs 1 gelöst. Vorteilhafte Weiterbildungen der Erfindung sind in den abhängigen Ansprüchen angegeben.

Hierdurch wird ein verbesserter Schlussquerträger geschaffen, der die Nachteile des bekannten Standes der Technik vermeidet und im Gegensatz zu diesem durch einen optimierten Kraftfluss hohe Vertikallasten aufnehmen kann. Ferner wird eine Lösung zur Verfügung gestellt, die aufgrund ihres optimierten Zuschnitts einfach und kostengünstig in Herstellung und Montage ist.

Die Erfindung schließt die technische Lehre ein, dass sich die zumindest annähernd in Querrichtung zu den oberen und unteren Befestigungsfahnen erstreckenden vertikalen Befestigungsfahnen im wesentlichen über der gesamten Höhe des Mittelsteges erstrecken und Schraubenlöcher aufweisen, wobei jeweils Schrauben im äußeren Bereich der vertikalen Befestigungsfahnen angeordnet sind, die in den oberen und unteren Befestigungsebenen der horizontalen Befestigungsfahnen angeordnet sind.

Die obere und untere rianschleiste verlaufen dabei in der Regel planparallel und die Befestigungsfahnen können vorzugsweise rechtwinklig von den Flanschleisten und dem Mittelsteg hervorstehen.

Diese Lösung bietet den Vorteil, dass über die Anordnung der Bohrungen in den oberen und unteren Bohrungsebenen eine Übertragung sehr hoher Kräfte und Momente möglich ist. Als Verbindungselemente kommen grundsätzlich alle bekannten Elemente, wie Schrauben, Nieten oder auch Schweißverbindungen in Frage. Vorzugsweise werden die Verbindungselemente als Verschraubungen ausgeführt, wobei erfindungsgemäß auch die Verschraubungen der vertikalen Befestigungsfahnen in die obere und untere Bohrungsebene gelegt sind. Damit wird die Wirksamkeit durch die Anordnungen der Verbindungselemente optimiert. Die dabei auftretenden und zu übertragenden Querkräfte in den Verbindungselementen werden mit dem vorliegenden Verschraubungsbild dadurch minimiert, dass auch die Schraubpunkte in den vertikal angeordneten Befestigungsfahnen nahe den Rahmenobergurten angeordnet sind. Die Verbindungsfläche vom vertikalen Mittelsteg aus ist so ausgeführt, dass die obere und untere Schraubenreihe am Schlussquerträger mit dem Rahmen verbunden ist, um einen optimalen Kraftfluss zu erhalten. Zugleich wird durch die erfindungsgemäße Ausführung der Verschraubung ferner sichergestellt, dass keine zusätzliche Eckversteifung vorgesehen werden muss, was die Gesamtkonstruktion des Schlussquerträgers vereinfacht. Somit sind die Eckversteifungen direkt im Schlussquerträger mittels eines optimierten Zuschnitts eingearbeitet. Weiterhin kann der Schlussquerträger durch die planparallele Ausführung der oberen und unteren Flanschleiste innerhalb des Ober- und Untergurtes der Längsträger angeordnet werden.

Eine weitere die Erfindung verbessernde Maßnahme sieht vor, dass die Bohrungen in den horizontalen Befestigungsfahnen einen im wesentlichen festen Bohrungsabstand aufweisen, wobei sich der Bohrungsabstand zur oberen bzw. unteren Bohrung in der vertikalen Befestigungsfahne fortsetzt. Durch diese Anordnung weisen alle Bohrungen in oberen und unteren Bohrungsebenen einen jeweils gleichen Rasterabstand auf. Dieser Rasterabstand kann ebenso in den Vertikalstegen der Längsträger vorgesehen werden, wobei die Längsträger eine Vielzahl von Bohrungen in einer entsprechenden oberen und unteren Bohrungsebene aufweisen. Damit wird ermöglicht, dass der Schlussquerträger entweder endseitig zwischen den Längsträgern oder mit einem Versatz gemäß dem Rasterabstand in einer beliebigen Position in Fahrtrichtung entfernt vom Ende der Längsträger montierbar ist. Der Schlussquerträger kann gemäß einem ganzzahligen Vielfachen des Rasterabstandes innerhalb der Längsträger durch vorübergehendes Lösen der Verschraubung umgesetzt werden.

Vorteilhafterweise weisen die oberen und / oder unteren Flanschleisten Aufnahmebohrungen insbesondere zur Montage von Einzelkomponenten auf. Diese Einzelkomponenten können beispielsweise elektrische Steckverbinder oder Elektrokupplungen als auch Kupplungen für hydraulische oder pneumatische Verbindungen zwischen dem Zugfahrzeug und dem Anhängefahrzeug sein. Die Verschraubung der Einzelkomponenten kann dabei, wie auch bei der Anhängerkupplung, über Verschraubungen erfolgen, die durch die Flanschleisten hindurch geführt sind.

Nach einer möglichen Weiterbildung der Erfindung wird vorgeschlagen, dass die obere und/ oder untere Flanschleiste des Schlussquerträgers endseitig jeweils mit Ausnehmungen ausgeführt ist. Diese Ausnehmungen bewirken vorteilhafterweise eine Gewichtsersparnis, wobei die Form der Ausnehmungen keine wesentliche Reduktion der Steifigkeit verursacht. Die Ausnehmungen zeigen eine geschwungene Kontur, welche mittig eine große Breite der Flanschleisten zeigt, die Breite zu den seitlichen Endbereichen hin abnimmt und erst im Bereich der Befestigungsfahnen wieder zunimmt. Durch diese geschwungene Kontur bleibt eine hohe Biegesteifigkeit für Kräfte, welche über die Anhängerkupplung in den Schlussquerträger eingeleitet werden, aufgrund des hohen Flächenträgheitsmoment des Querschnittes über der Breite des Schlussquerträgers erhalten und es entstehen keine hohen mechanischen Spannungen in den Flanschleisten.

Ein weiterer Vorteil der Erfindung wird dadurch erreicht, dass der Zuschnitt des Blechmaterials des Schlussquerträgers zwischen den vertikalen Befestigungsfahnen des Mittelsteges und den horizontalen Befestigungsfahnen der oberen und unteren Flanschleiste tropfenförmige Aussparungen aufweist. Der Körper des Schlussquerträgers wird nach dem Blechzuschnitt mittels eines Trennverfahrens durch ein Blechumformverfahren weiterverarbeitet, indem die Flanschleisten und Befestigungsfahnen in gleicher Richtung abgekantet werden. Die tropfenförmigen Aussparungen verhindern dabei ein unkontrolliertes Materialverhalten aufgrund von Spannungsspitzen in den entstehenden Eckbereichen des Schlussquerträgers. Zudem weisen die horizontalen und die vertikalen Befestigungsfahnen in ihrer Endposition aufeinander zu.

Um eine sichere Verbindung zwischen dem Schlussquerträger und den Längsträgern sicherzustellen wird vorgeschlagen, dass in den horizontalen Befestigungsfahnen 2 bis 6, vorzugsweise 3 bis 5 und besonders bevorzugt 4 Bohrungen in einer Bohrungsebene angeordnet sind. Hierbei sind die Verschraubungen derart ausgeführt, dass die Vorspannkraft der Schrauben für die Befestigung ausreichend ist.

Die Anzahl von vorzugsweise 4 Bohrungen in den horizontalen Befestigungsfahnen gewährleistet eine sichere Verbindung zwischen dem Schlussquerträger und den Längsträgern, so dass hohe Kräfte und Momente übertragbar sind.

Eine weitere die Erfindung verbessernde Maßnahme sieht vor, dass die Höhe des Schlussquerträgers einen Einbau in das Profil des Längsträgers ermöglicht, sodass der Schlussquerträger in Längsrichtung innerhalb des Längsträgers verschieblich ist.

Gemäß einer vorteilhaften Weiterbildung der Erfindung wird der Schlussquerträger aus kalt stauchbarem QSt 500 hergestellt, was eine gewünschte Festigkeit aufweist. Alternativ zu dem vorgenannten Werkstoff eignet sich auch die Verwendung von QStE420, QStE600 oder QStE700.

Die Materialstärke beträgt dabei 7,5 mm bis 10 mm, vorzugsweise 8 mm bis 9,5 mm. Hierdurch lässt sich der Zuschnitt noch optimal stanzen und biegen und weist die gewünschte Festigkeit auf.

Schließlich sieht ein Verfahren zur Herstellung eines Schlussträgers für ein Nutzfahrzeug folgende Schritte vor:
- Hersteiien einer Ausnehmung in einem flachen Stahlblech, wobei das optimierte Zuschnittmuster tropfenförmige Aussparungen an den Enden der Biegekanten aufweist und
- Biegen des Zuschnittteils entlang der Biegekanten, so dass ein einstückiges U-förmiges Profilteil mit Befestigungsfahnen entsteht.

Hierbei kann das Herstellen mittels Ausstanzen, Laserschneiden und/oder jedem weiterengeeigneten Trennverfahren erfolgen.

Durch die tropfenförmigen Aussparungen können die vertikalen Befestigungsfahnen so gebogen werden, dass deren Schraubenlöcher in einer Ebene mit den Schraubenlöchern der horizontalen Befestigungsfahnen liegen, was eine optimale Krafteinleitung der Vertikalkräfte in den Fahrzeugrahmen und die Aufnahme großer Momente ermöglicht. Außerdem wird hierdurch ein verwindungsweicher Schlussquerträger geschaffen, der Spannungsspitzen im Rahmen vermeidet. Eine zusätzliche Eckenverstärkung ist nicht erforderlich. Die Ausführung als einstückiger Schlussquerträger ermöglicht eine einfache und kostengünstige Herstellung und Montage.

Nachfolgend wird eine vorteilhafte Ausführungsform der vorliegenden Erfindung zusammen mit der Beschreibung der Figuren näher dargestellt. Es zeigen:
- Fig. 1a,b: eine Seitenansicht und eine Draufsicht eines Schlussquerträgers, der an einem Rahmen eines Nutzfahrzeugs montiert ist;
- Fig. 2: eine perspektivische Ansicht des Schlussquerträgers aus Figur 1;
- Fig. 3a,b: eine Rückansicht und eine Seitenansicht des Schlussquerträgers;
- Fig. 4a,b,c: die Einbaulage des Schlussquerträgers in den Längsträgern des Rahmens in der Rückansicht und in zwei verschiedenen Positionen zwischen den Längsträgern;
- Fig. 5: den Zuschnitt des Blechmaterials des Schlussquerträgers vor der Umformung.

Bei den Figuren handeit es sich lediglich um beispielhafte schematische Darstellungen. Die Richtungsangaben beziehen sich auf die Fahrzeugfahrtrichtung.

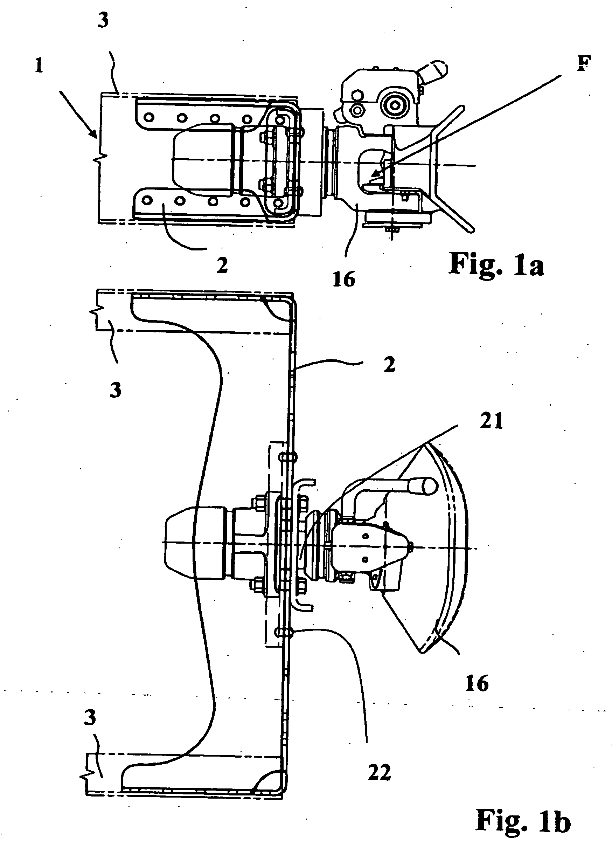

Fig. 1 a zeigt eine Seitenansicht mit teiltransparenter Darstellung einer vorteilhaften Ausführungsform des erfindungsgemäßen Schlussquerträgers 2. In dieser Figur ist die auf den Rahmen bzw. Schlussquerträger einwirkende Kraft bei Belastung durch eine Starrdeichsel mit dem Pfeil F angedeutet. Fig. 1b zeigt eine Draufsicht auf einen Ausschnitt eines Endbereiches des Rahmens 1 eines Nutzfahrzeugs, in der zwei parallel verlaufende Längsträger 3 gezeigt sind. Die Längsträger 3 sind U-förmige, längs in Fahrtrichtung parallel und zueinander beabstandet verlaufende Profile, wobei die Öffnungen der U-förmigen Längsträger 3 aufeinander zu gerichtet sind.
Fig. 1b zeigt eine Draufsicht. Zwischen den Längsträgern 3 ist ein Schlussquerträger 2 angeordnet, welcher die Längsträger 3 endseitig miteinander verbindet. Dadurch, dass der Schlussquerträger 2 quasi wie eine Schublade in entsprechende durch die Längsquerträger 3 gebildete Schienen eingeschoben wird, ist er leicht montierbar und demontierbar. Der Schlussquerträger 2 ist im wesentlichen U-förmig ausgebildet und ist seitlich mit den Längsträgern 3 verschraubt, wobei die Verschraubung nicht dargestellt ist. Mittig im Schlussquerträger 2 ist eine Anhängerkupplung 16 montiert, welche mit ihrer Zugstange 21 durch den Schlussquerträger 2 hindurchragt. Die Anhängerkupplung 16 ist über einen Flansch mit dem Schlussquerträger 2 mittels entsprechnder Verschraubungen 22 befestigt.

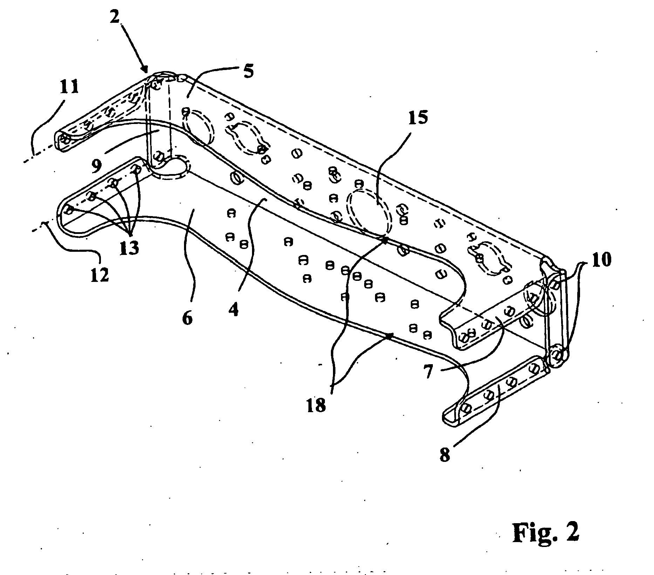

In Fig. 2 ist der Schlussquerträger 2 perspektivisch dargestellt. Der U-förmige Längsquerschnitt des Schlussquerträgers 2 wird im wesentlichen aus einem Mittelsteg 4 und davon parallel in gleicher Richtung abragenden oberen und unteren Flanschleisten 5 und 6 gebildet. Der Schlussquerträger 2 gemäß dem vorliegenden Ausführungsbeispiel ist als Stanz- und Biegeteil aus QSt 500 hergestellt und weist eine Wandstärke von 8 mm auf.

Die beiden U-Schenkel, d.h. die obere Flanschleiste 5 und die untere Flanschleiste 6, weisen an ihren offenen Enden Ausnehmungen 18 auf, welche in einer geschwungenen Kontur die Breite der Flanschleisten 5 und 6 über der Breite des Schlussquerträgers 2 veränderlich reduzieren. Die veränderliche Breite der oberen und unteren Flanschleiste 5 und 6 steigt dabei in der Mitte und in den Endbereichen des Schlussquerträgers 2 an und geht seitlich in eine obere und untere horizontale Befestigungsfahne 7 und 8 über. Die Befestigungsfahnen sind an der oberen Flanschleiste 5 und an der unteren Flanschleiste 6 jeweils endseitig vorhanden, sodass vier horizontal verlaufende Befestigungsfahnen die Flanschleisten 5 und 6 in Längsrichtung des Schlussquerträgers 2 abschließen.

Weiterhin sind ebenfalls am Mittelsteg 4 endseitig vertikale Befestigungsfahnen 9 angeformt, womit an jeweils einem Ende des Schlussquerträgers 2 drei Befestigungsfahnen 7, 8 und 9 vorhanden sind, welche in einer Ebene den Schlussquerträger 2 seitlich abschließen. In den oberen und unteren Befestigungsfahnen 7 und 8 sind jeweils vier Schraubenlöcher 13 angeordnet, wobei die vertikalen Befestigungsfahnen 9 jeweils zwei Schraubenlöcher 10 aufweisen. Die Schraubenlöcher 10 und 13 nehmen Schrauben auf, um den Schlussquerträger 2 mit den Längsträgern 3 zu verbinden.

Die Schraubenlöcher 13 sind auf den oberen und unteren Befestigungsebenen 11 und 12 jeweils auf einer Geraden angeordnet, wobei die obere und untere Schraubenöffnung 10 in der vertikalen Befestigungsfahne 9 ebenfalls in den von den Schraubenlöchern 13 gebildeten Befestigungsebenen 11 und 12 liegen, so dass die gesamten Verschraubungen des Schlussquerträgers 2 an den Längsträgern 3 in einer oberen und einer unteren Befestigungsebene 11 und 12 angeordnet sind. Die Verschraubungen des Schlussquerträgers 2 können daher jeweils auf einer Geraden angeordnet werden und je eine Verschraubungsreihe bilden. Hierdurch wird eine verbesserte Krafteinleitung und damit ein optimierter Kraftfluss von der Anhängerkupplung in den Fahrzeugrahmen sichergestellt.

Mittig in der U-Basis, d.h. im Mittelsteg 4, weist der Schlussquerträger 2 eine Durchgangsöffnung 15 auf, durch die die Anhängerkupplung 16 mit ihrer Zugstange 21 hindurchgeht (nicht dargestellt), wobei weitere Löcher für Befestigungsflansche und andere Hilfsmittel im Mittelsteg 4 angebracht sind.

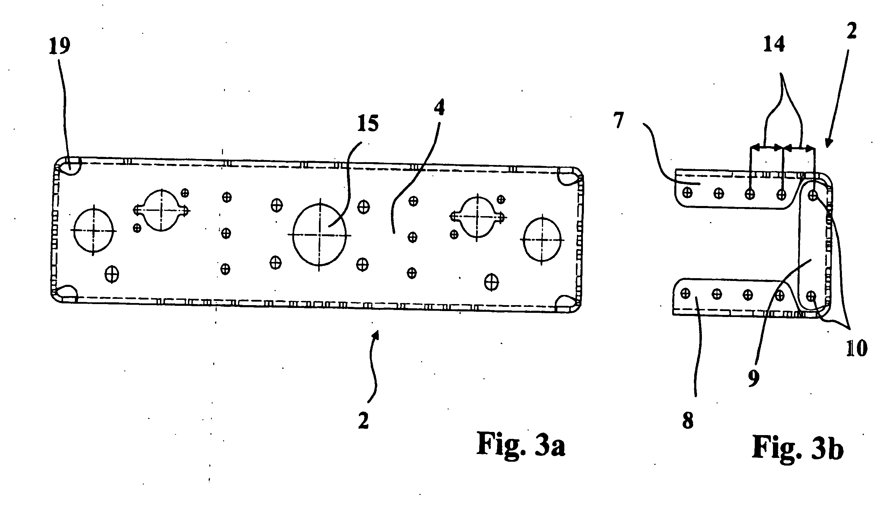

in Fig. 3a und 3b ist der Schlussquerträger in weiteren Ansichten dargestellt, wobei die Fig. 3a eine Rückansicht und Fig. 3b eine Seitenansicht zeigt. In der Rückansicht ist das Lochbild der um die Aufnahmeöffnung 15 im Mittelsteg 4 zur Aufnahme der Anhängerkupplung 16 erkennbar. In den Eckbereichen weist der Schlussquerträger 2 Aussparungen 19 auf, wodurch diese freigeschnitten sind. In Fig. 3b sind in der Seitenansicht des Schlussquerträgers 2 die obere und untere Befestigungsebene 11 und 12 erkennbar, wobei sich der konstante Lochabstand 14 zwischen den Schraubenlöchern 13 seitlich zur Bohrung 10 jeweils fortsetzt, so dass alle Schraubenlöcher (13, 10) innerhalb einer Befestigungsebene 11 und 12 gleich beabstandet angeordnet sind. Zwischen den Schraubenlöchern 10, können weitere nicht dargestellte Löcher vorgesehen sein. Die vertikalen Befestigungsfahnen 9 erstrecken sich im wesentlichen über die gesamte Höhe des Mittelsteges 4, wobei eine Materialstärke vorgesehen wird, die ein Ausreißen sicher verhindert.

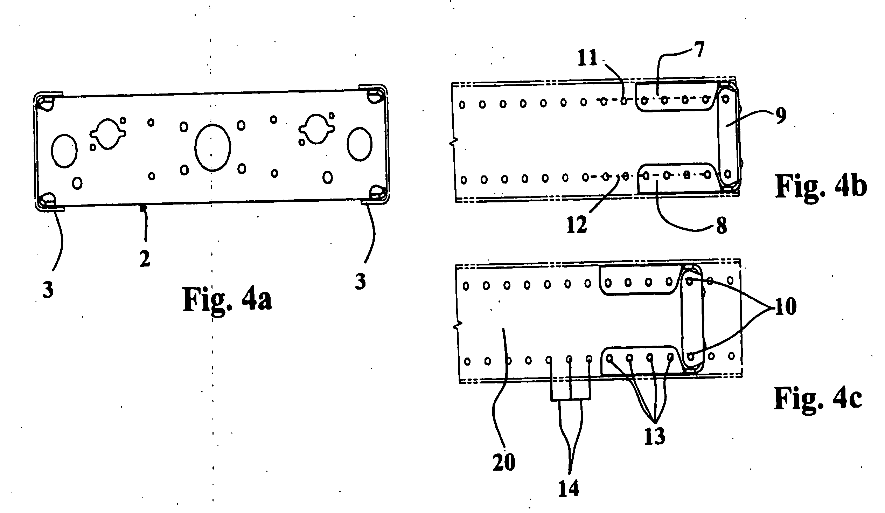

In den Figuren 4a, 4b und 4c ist der Einbau des Schlussquerträgers 2 zwischen den parallel verlaufenden Längsträgern 3 gezeigt. Fig. 4a verdeutlicht, dass der Schlussquerträger 2 durch die U-förmig nach innen ausgerichteten Ober- und Untergurte der Längsträger 3 endseitig eingefasst ist. Die Figuren 4b und 4c geben verschiedene Einbaupositionen des Schlussquerträgers wieder. In Fig. 4b ist der Schlussquerträger 2 endseitig in den Längsträgern 3 des Rahmens 1 montiert, wohingegen die Fig. 4c einen Einbau des Schlussquerträgers 2 in Fahrtrichtung versetzt wiedergibt. Diese variable Einbaumöglichkeit ergibt sich insbesondere durch die in jeweiligen Befestigungsebenen 11 und 12 auf je einer Geraden angeordneten und gleichförmig beabstandeten Schraubenlöcher 10 und 13. Da die Längsträger ebenfalls mit dem gleichen Lochabstand 14 angeordnete Löcher in einer oberen und einer unteren Befestigungsebene aufweisen, kann der Schlussquerträger beliebig innerhalb der Längsträger 3 versetzt werden.

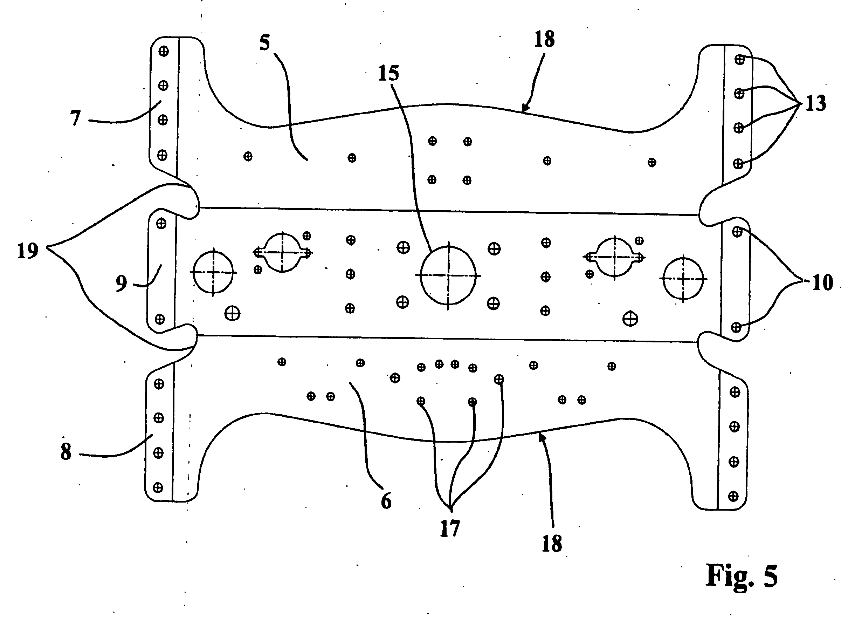

Fig. 5 zeigt einen Zuschnitt des Blechmaterials des Schlussquerträgers 2, wobei in den oberen und unteren Flanschleisten 5 und 6 gestanzte Aufnahmebohrungen 17 angeordnet sind, die entsprechend der Notwendigkeit der Montage von Hilfseinrichtungen Möglichkeiten ihrer Verschraubung bieten. Seitlich zeigt der Blechzuschnitt zwischen den horizontalen Befestigungsfahnen 7, 8 und den vertikalen Befestigungsfahnen 9 tropfenförmige Aussparungen 19, welche die gewünschte Blechumformung ermöglichen. Hierdurch können die Schraubenöffnungen 10 in eine Befestigungsebene mit den Schraubenöffnungen 13 gebracht werden. Außerdem wird hierdurch ein verwindungsweicher Schlussquerträger 2 geschaffen, der Spannungsspitzen im Rahmen und im Schlussquerträger vermeidet. Zudem ist die genaue Form der Ausnehmungen 18 erkennbar, welche die obere und untere Flanschleiste 5 und 6 konturieren. Die dünn dargestellten Linien im Blechzuschnitt geben die späteren Biegelinien der Umformung wieder.

Die Erfindung, welche durch die beiliegenden Ansprüche definiert wird, beschränkt sich in ihrer Ausführung nicht auf das vorstehend angegebene bevorzugte Ausführungsbeispiel.

### Bezugszeichenliste

- **1**: Rahmen
- **2**: Schlussquerträger
- **3**: Längsträger
- **4**: Mittelsteg
- **5**: obere Flanschleiste
- **6**: untere Flanschleiste
- **7**: obere horizontale Befestigungsfahne
- **8**: untere horizontale Befestigungsfahne
- **9**: vertikale Befestigungsfahne
- **10**: Loch
- **11**: obere Befestigungsebene
- **12**: untere Befestigungsebene
- **13**: Schraubenloch
- **14**: Lochabstand
- **15**: Aufnahmeöffnung
- **16**: Anhängerkupplung
- **17**: Aufnahmeöffnung
- **18**: Ausnehmungen
- **19**: Aussparungen
- **20**: Vertikalsteg
- **21**: Zugstange
- **22**: Verschraubungen

## Patentansprüche

1. Schlussquerträger (2) für ein Nutzfahrzeug mit einem zwei Längsträger (3) aufweisenden Fahrzeugrahmen (1), wobei der Schlussquerträger (2) als einstückiges im wesentlichen U-förmig ausgebildetes Profilteil mit einem Mittelsteg (4) und beidseitig an Längskantn des Mittelstegs (4) anschließenden Flanschleisten (5, 6) ausgebildet ist und an dem Schlussquerträger (2) stirnseitig Befestigungsfahnen (7, 8, 9) vorgesehen sind, wobei obere und untere Befestigungsfahnen (7, 8) jeweils von den beiden Flanschleisten (5, 6) und beidseitig jeweils eine zumindest annähernd in Querrichtung zu den oberen und unteren Befestigungsfahnen (7, 8) verlaufende vertikale Befestigungsfahne (9) von dem Mittelsteg (4) des U-Profils hervorstehen und an den Befestigungsfahnen (7, 8, 9) Löcher (10, 13) vorgesehen sind, von denen die in den oberen und unteren Befestigungsfahnen befindlichen Löcher (10) jeweils in einer oberen und einer unteren Befestigungsebene (11, 12) angeordnet sind, wobei die obere und untere Befestigungsfahne (7, 8) sowie die vertikale Befestigungsfahne (9) an jeweils einem Ende des Schlussquerträgers (2) vorhanden sind, und den Schlussquerträger seitlich jeweils in einer Ebene abschließen. **dadurch gekennzeichnet, dass** sich die beidseitig des Mittelstegs (4) angeordneten vertikalen Befestigungsfahnen (9) im wesentlichen über die gesamte Höhe des Mittelstegs (4) erstrecken und zwei Löcher (10) aufweisen, die jeweils in der oberen und unteren Befestigungsebene (11, 12) der oberen und unteren Befestigungsfahnen (7, 8) angeordnet sind,

2. Schlussquerträger (2) für ein Nutzfahrzeug nach Anspruch 1, **dadurch gekennzeichnet, dass** die Löcher (13) in den oberen und unteren Befestigungsebenen (11, 12) einen vorbestimmten Lochabstand (14) aufweisen, wobei sich der Lochabstand (14) Löcher (13) in den oberen und unteren Befestigungsfahnen (7, 8) in der vertikalen Befestigungsfahne (9) fortsetzt.

3. Schlussquerträger (2) für ein Nutzfahrzeug nach einem der vorgenannten Ansprüche, **dadurch gekennzeichnet, dass** die obere und / oder untere Flanschleiste (5, 6) Aufnahmeöffnungen (17) aufweist.

4. Schlussquerträger (2) für ein Nutzfahrzeug nach einem der vorgenannten Ansprüche, **dadurch gekennzeichnet, dass** die obere und/ oder untere Flanschleiste (5, 6) endseitig jeweils mit geschwungenen Ausnehmungen (18) ausgeführt ist.

5. Schlussquerträger (2) für ein Nutzfahrzeug nach einem der vorgenannten Ansprüche, **dadurch gekennzeichnet, dass** der Schlussquerträger (2) aus einem Blechmaterial gefertigt ist und ein Zuschnitt des Blechmaterials des Schlussquerträgers (2) zwischen den vertikalen Befestigungsfahnen (9) des Mittelsteges (4) und den horizontalen Befestigungsfahnen (7, 8) der oberen und unteren Flanschleiste (5, 6) tropfenförmige Aussparungen (19) aufweist.

6. Schlussquerträger (2) für ein Nutzfahrzeug nach einem der vorgenannten Ansprüche, **dadurch gekennzeichnet, dass** in den horizontalen Befestigungsfahnen (7, 8) 2 bis 6, vorzugsweise 3 bis 5 und besonders bevorzugt 4 Löcher (13) in einer Befestigungsebene (11, 12) angeordnet sind.

7. Schlussquerträger (2) für ein Nutzfahrzeug nach einem der vorgenannten Ansprüche, **dadurch gekennzeichnet, dass** eine Geometrie der Befestigungsfahnen (7, 8, 9) derart ausgeführt ist, dass die Löcher (10, 13) in den Befestigungsfahnen (7, 8, 9) eine hinreichende Lochleibung aufweisen.

8. Schlussquerträger (2) für ein Nutzfahrzeug nach einem der vorgenannten Ansprüche, **dadurch gekennzeichnet, dass** eine Höhe des Schlussquerträgers (2) einen Einbau in ein Profil des Längsträgers (3) ermöglicht, so dass der Schlussquerträger (2) in Längsrichtung innerhalb des Längsträgers (3) beweglich ist.

9. Schlussquerträger (2) für ein Nutzfahrzeug nach einem der vorgenannten Ansprüche, **dadurch gekennzeichnet, dass** der Schlussquerträger aus QSt 500 hergestellt ist.

10. Schlussquerträger (2) für ein Nutzfahrzeug nach einem der vorgenannten Ansprüche, **dadurch gekennzeichnet, dass** der Schlussquerträger eine Wandstärke von 7,5mm bis 10mm, vorzugsweise 8mm bis 9,5mm aufweist.

## Claims

1. Rear cross member (2) for a commercial vehicle with a vehicle frame (1) that has two longitudinal frame members (3), with the rear cross member (2) being designed as a single-piece, largely U-shaped profiled part with a centre web (4) and flange strips (5, 6) attached to longitudinal edges of the centre web (4) on both sides and fastening lugs (7, 8, 9) being provided on the face of the rear cross-member (2), with upper and lower fastening lugs (7, 8) respectively projecting from the two flange strips (5, 6) and, on each side, a vertical fastening lug (9) that runs almost transversal to the upper and lower fastening lugs (7, 8) projecting from the centre web (4) of the U-shaped section and with holes (10, 13) being provided on the fastening lugs (7, 8, 9), of which the holes (10) situated in the upper and lower fastening lugs are respectively arranged in an upper and lower fastening plane (11, 12), the upper and lower fastening lug (7, 8) and the vertical fastening lug (9) being present at in each case one end of the rear cross member (2) and terminating the rear cross member laterally in each case in one plane, **characterised in that** the vertical fastening lugs (9) arranged on both sides of the centre web (4) largely extend across the entire height of the centre web (4) and have two holes (10) that are respectively arranged in the upper and lower fastening plane (11, 12) of the upper and lower fastening lugs (7, 8).

2. Rear cross member (2) for a commercial vehicle according to claim 1, **characterised in that** the holes (13) in the upper and lower fastening planes (11, 12) have a predetermined hole spacing (14), with the hole spacing (14) of holes (13) in the upper and lower fastening lugs (7, 8) being continued in the vertical fastening lug (9).

3. Rear cross member (2) for a commercial vehicle according to one of the preceding claims, **characterised in that** the upper and/or lower flange strip (5, 6) has accommodating openings (17).

4. Rear cross member (2) for a commercial vehicle according to one of the preceding claims, **characterised in that** the upper and/or lower flange strip (5, 6) is executed at the end with curved notches (18).

5. Rear cross member (2) for a commercial vehicle according to one of the preceding claims, **characterised in that** the rear cross member (2) is produced from a sheet metal material and a pre-cut part of the sheet metal material of the rear cross member (2) has drop-shaped recesses (19) between the vertical fastening lugs (9) of the centre web (4) and the horizontal fastening lugs (7, 8) of the upper and lower flange strip (5, 6).

6. Rear cross member (2) for a commercial vehicle according to one of the preceding claims, **characterised in that** 2 to 6, preferably 3 to 5 and especially preferably 4 holes (13) are arranged in a fastening plane (11, 12) in the horizontal fastening lugs (7, 8).

7. Rear cross member (2) for a commercial vehicle according to one of the preceding claims, **characterised in that** a geometry of the fastening lugs (7, 8, 9) is executed in such a way that the holes (10, 13) in the fastening lugs (7, 8, 9) have sufficient bearing stress.

8. Rear cross member (2) for a commercial vehicle according to one of the preceding claims, **characterised in that** a height of the rear cross member (2) enables installation into a section of the longitudinal frame member (3) so that the rear cross member (2) is movable in the longitudinal direction within the longitudinal frame member (3).

9. Rear cross member (2) for a commercial vehicle according to one of the preceding claim, **characterised in that** the rear cross member is manufactured from QSt 500.

10. Rear cross member (2) for a commercial vehicle according to one of the preceding claims, **characterised in that** the rear cross member has a wall thickness of 7.5mm to 10mm, preferably 8mm to 9.5mm.

## Revendications

1. Traverse arrière (2) d'un véhicule industriel équipé d'un cadre de véhicule (1) présentant deux longerons (3), la traverse arrière (2) étant conçue sous forme de partie profilée d'une seule pièce, essentiellement en forme de U, présentant un montant central (4) et des ailes (5, 6) se raccordant des deux côtés aux bords longitudinaux du montant central (4) et des éclisses de fixation (7, 8, 9) étant prévues du côté frontal sur la traverse arrière (2), des éclisses de fixation supérieure et inférieure (7, 8) faisant chacune saillie par rapport aux deux ailes (5, 6) et une éclisse de fixation verticale (9), s'étendant au moins approximativement dans le sens transversal par rapport aux éclisses de fixation supérieure et inférieure (7, 8), faisant saillie à chaque fois des deux côtés par rapport au montant central (4) du profilé en U et des trous (10, 13) étant prévus au niveau des éclisses de fixation (7, 8, 9), parmi lesquels les trous (10) prévus dans les éclisses de fixation supérieure et inférieure sont disposés chacun dans des plans de fixation supérieur et inférieur (11, 12), les éclisses de fixation (7, 8) supérieure et inférieure ainsi que l'éclisse de fixation verticale (9) étant respectivement prévues sur une extrémité de la traverse arrière (2) et terminant la traverse arrière latéralement dans un plan respectif, **caractérisée en ce que** les éclisses de fixation verticales (9) disposées des deux côtés du montant central (4) s'étendent pour l'essentiel sur toute la hauteur du montant central (4) et présentent deux trous (10) disposés chacun dans les plans de fixation supérieur et inférieur (11, 12) des éclisses de fixation supérieure et inférieure (7, 8).

2. Traverse arrière (2) d'un véhicule industriel selon la revendication 1, **caractérisée en ce que** les trous (13) dans les plans de fixation supérieur et inférieur (11, 12) ont un écart entre trous prédéterminé (14), cet écart entre trous (14) des trous (13) dans les éclisses de fixation supérieure et inférieure (7, 8) se poursuivant dans l'éclisse de fixation verticale (9).

3. Traverse arrière (2) d'un véhicule industriel selon l'une des revendications mentionnées précédemment, **caractérisée en ce que** l'aile supérieure (5) et/ou l'aile inférieure (6) présentent des trous de réception (17).

4. Traverse arrière (2) d'un véhicule industriel selon l'une des revendications mentionnées précédemment, **caractérisée en ce que** l'aile supérieure (5) et/ou l'aile inférieure (6) présentent respectivement des logements courbes (18) du côté de leurs extrémités.

5. Traverse arrière (2) d'un véhicule industriel selon l'une des revendications mentionnées précédemment, **caractérisée en ce que** la traverse arrière (2) est fabriquée en tôle et qu'une partie découpée de cette tôle de la traverse arrière (2) présente des évidements en forme de goutte (19) entre les éclisses de fixation verticales (9) du montant central (4) et les éclisses de fixation horizontales (7, 8) des ailes (5, 6) supérieure et inférieure.

6. Traverse arrière (2) d'un véhicule industriel selon l'une des revendications mentionnées précédemment, **caractérisée en ce que** 2 à 6 trous, de préférence 3 à 5 trous, et particulièrement préférablement 4 trous (13), sont disposés dans les éclisses de fixation horizontales (7, 8) dans un plan de fixation (11, 12).

7. Traverse arrière (2) d'un véhicule industriel selon l'une des revendications mentionnées précédemment, **caractérisée en ce qu'**une géométrie des éclisses de fixation (7, 8, 9) est réalisée de telle manière que les trous (10, 13) dans les éclisses de fixation (7, 8, 9) présentent une paroi de trou suffisante.

8. Traverse arrière (2) d'un véhicule industriel selon l'une des revendications mentionnées précédemment, **caractérisée en ce qu'**une hauteur de la traverse arrière (2) permette le montage dans un profil du longeron (3) de telle manière que la traverse arrière (2) soit mobile dans le sens longitudinal à l'intérieur du longeron (3).

9. Traverse arrière (2) d'un véhicule industriel selon l'une des revendications mentionnées précédemment, **caractérisée en ce que** la traverse arrière est fabriquée en QSt 500.

10. Traverse arrière (2) d'un véhicule industriel selon l'une des revendications mentionnées précédemment, **caractérisée en ce que** la traverse arrière présente une épaisseur de paroi comprise entre 7,5 et 10 mm, de préférence entre 8 et 9,5 mm.
